# EUROPEAN PATENT APPLICATION

(11) **EP 1 077 206 A1**
(43) Date of publication of application: **21.02.2001**
(21) Application number: 00115647.0
(22) Date of filing: 20.07.2000
(51) Int. Cl.: C07C 7/20, C09K 15/20, C09K 15/18, C07B 63/04

(54) **Method of inhibiting vapor phase fouling in vinyl monomer systems**

(30) Priority: 18.08.1999 US 376515
(71) Applicant: NALCO/EXXON ENERGY CHEMICALS L.P., Sugarland, Texas 77478 (US)
(72) Inventor: Manek, Maria Beata, Stafford, Texas 77477 (US); Arauzo, Hernando Diaz, Houston, Texas 77479 (US); Patel, Natu R., Houston, Texas 77043-1711 (US)
(74) Representative: Ebner von Eschenbach, Jennifer

(57) **Abstract**

Vapor-phase vinyl polymerization fouling in monomer systems is inhibited by the use of an effective amount of an antipolymerant selected from stable free radicals, volatile alkylamines, or both. The preferred nitroxide is 3,6-dihydro-2, 2,6,6-tetramethyl-1(2H)-pyridinyloxy, and the preferred alkylamines are primary and secondary amines of methyl, ethyl, and propyl alkyls.

## Description

### FIELD OF THE INVENTION

This invention relates to a method of inhibiting undesired polymer formation in facilities for separating, handling, and storing of vinyl monomers. More specifically, the invention relates to the use of a stable free radical, preferably a specific type of nitroxide, or a volatile amine, or both as antipolymerants in the vapor phase of such monomer systems.

### BACKGROUND OF THE INVENTION

In the recovery, processing, handling, and storage of many vinyl monomers, fouling in the vapor phase is a serious problem. The fouling results from the deposition of polymers formed during undesired thermal polymerization of certain monomers (e.g., butadiene) in the system. During these handling processes of monomers, the undesired polymers form a film or deposit on the plant equipment. This not only reduces plant efficiency but causes periodic plant shutdowns in order to remove the unwanted deposits.

In many vinyl monomer systems (e.g., butadiene and styrene) undesired fouling in the vapor phase takes the form of popcorn polymer. Popcorn polymer is designated such because it is a friable polymeric material that resembles popcorn in appearance. The general characteristics of this polymer are insolubility in the process liquids, adhesion to metal surfaces, and the great force exerted by it on the equipment when it grows in confined spaces. Although popcorn polymer is often found in the vapor phase of many vinyl monomers, it is a particular problem in butadiene and styrene monomer systems. Popcorn polymer formation in the vapor phase of these systems results in loss of production efficiency. Moreover, if unabated, the popcorn polymer can grow from a tiny size to a large hard polymeric mass. The large polymer particles, alone or agglomerated, can damage equipment, plug flow lines, downcomers, and trays, and present environmental disposal problems.

Known polymerization inhibitors for monomer operations include t-butylcatechol, diethylhydroxylamine, sodium nitrite, and nitrosophenylhydroxylamine.

U.S. Patent No. 4,670,131 discloses the use of stable free radicals selected mainly for their ability to protect the liquid phase of the monomer systems. One such type of stable free radical are nitroxides, which are described as being useful to prevent unwanted polymerization. Column 2, line 68 - Column 3, lines 1-5 of U.S. Patent No. 4,670,131 characterizes these nitroxides as liquid phase inhibitors:
"In distillation the stable free radical may be selected to be higher boiling than the overhead, hence it will remain bottoms. Thus, for example, in ethylene recovery, there will be no stable free radical in the ethylene overhead product to interfere with any subsequent polymerization."
The patent mentions that popcorn polymers can be inhibited, but presents no data.

Additional inhibitors of unwanted polymerization in vinyl monomer systems are desired.

### SUMMARY OF THE INVENTION

The first aspect of the instant claimed invention is a method of inhibiting polymerization and consequent fouling in a monomer system comprising a liquid monomer phase and a vapor phase, said method comprising introducing into the liquid monomer phase an effective amount of an inhibitor having sufficient volatility in the system to enter the vapor phase of the system and inhibit vinyl polymerization therein, said inhibitor comprising a combination of:
(a) from 10 to 90 wt % of a nitroxide, and
(b) from 10 to 90 wt % of volatile alkyl amines, wherein the alkyl groups are selected from methyl, ethyl, propyl groups and aliphatic ring structures containing up to 3 heteroatoms.

The second aspect of the instant claimed invention is a method of inhibiting polymerization and consequent fouling in a monomer system comprising a liquid phase and a vapor phase, said method comprising introducing into the liquid monomer phase an effective amount of an inhibitor having sufficient volatility in the system to enter the vapor phase of the system and inhibit vinyl polymerization therein, said inhibitor comprising
3, 6-dihydro-2, 2, 6, 6-tetramethyl-1(2H)-pyridinyloxy.

The third aspect of the instant claimed invention is a method of inhibiting polymerization and consequent fouling in a monomer system comprising a liquid phase and a vapor phase, said method comprising introducing into the liquid monomer phase an effective amount of an inhibitor having sufficient volatility in the system to enter the vapor phase of the system and inhibit vinyl polymerization therein, said inhibitor comprising an alkylamine selected from the groups consisting of primary and secondary amines of methyl, ethyl, propylamines and morpholine.

The fourth aspect of the instant claimed invention is an antipolymerant composition for use in inhibiting the vapor phase vinyl polymerization in monomer systems comprising a combination of
(a) from 10 to 90 wt % of a nitroxide, and
(b) from 10 to 90 wt % of an alkylamine selected from primary and secondary alkylamines of methyl, ethyl, propyl groups and aliphatic ring structure.

### DESCRIPTION OF THE PREFERRED EMBODIMENTS

The method of the present invention employs a vapor phase polymerization inhibitor (antipolymerant) for vinyl monomer systems (e.g., recovery, separation, distillation, extraction, purification, handling and storage among others). The inhibitor is a stable free radical, a volatile alkylamine, or both. The method contemplates three preferred embodiments:
(1) a combination of a stable free radical and a volatile alkylamine;
(2) a specific nitroxide, 3,6-dihydro-2,2,6,6-tetramethyl-1(2H)-pyridinyloxy (DHTMPO), used without the amine; and
(3) an alkylamine used as the inhibitor without the nitroxide.

The term "stable free radical" as used herein shall mean a free radical that can be prepared by conventional chemical methods and will exist long enough to be used in a subsequent chemical reaction or examined in a static system by normal methods of spectroscopy. Generally, the stable free radicals of the present invention have half-lives of at least one (1) year. The term "half-life" as used herein means that period at the end, of which one-half of the radicals, existing at the beginning of said time period, are still in existence. The term "stable free radical" shall also be understood to include the precursor to a stable free radical from which the stable free radical may be produced in situ.

Tests have shown that many of the stable free radicals used to inhibit monomer system bottoms (liquid phase) in the presence of certain lower alkyl amines are also effective vapor phase inhibitors in the same system.

Tests have also shown that a liquid, unsaturated, stable nitroxide 3,6-dihydro-2,2,6,6-tetramethyl-1(2H)-pyridinyloxy (DHTMPO), provides the best protection against vapor phase polymerization of the nitroxides tested. The relatively low boiling point of this nitroxide permits part of the nitroxide to enter the vapor phase and inhibit vinyl polymerization therein.

The preferred volatile alkylamines include primary and secondary amines wherein the alkyl group is methyl, ethyl, propyl, or an aliphatic ring structure. The term volatile used herein with respect to amines means that amines are able to enter the vapor phase of a monomer system under process conditions. The most preferred alkylamines are methyl, dimethyl, ethyl, diethyl, isopropyl, diisopropyl, n-propyl, and di-n-propyl amines.

The first aspect of the method of the present invention involves the use of:
(A) a stable free radical, having the following formula (I): 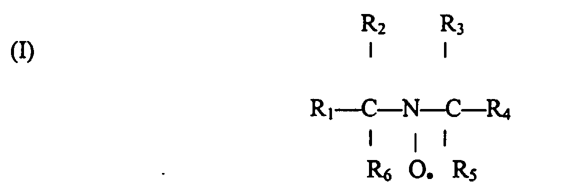 wherein each of R₁, R₂, R₃ and R₄ is an alkyl group or heteroatom substituted alkyl group having 1 to 15 carbon atoms, wherein R₅ and R₆:
   (i) each are an alkyl group having 1 to 15 carbon atoms, or a substituted alkyl group having 1 to 15 carbon atoms wherein the substituent is halogen, cyano, -CONH₂, -SC₆H₅, -S-COCH₃, -OCOH₃, -OCOC₂H₅, carbonyl, alkenyl, wherein the double bond is not conjugated with the nitroxide moiety, or ― COOR wherein R of the ―COOR group is alkyl or aryl, or
   (ii) together form part of a ring that contains at least 4 and no more than 5 carbon atoms and up to two heteratoms of O, N or S; and
(B) a volatile alkyl amine having the following formula (II): 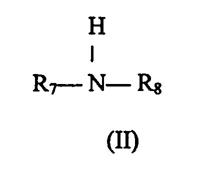 where R₇ is a methyl, ethyl, n-propyl or an isopropyl group, and
   R₈ is H, or methyl, ethyl, n-propyl or an isopropyl group,
   or R₇ and R₈ together form part of a ring that contains at least 4 and no more than 5 carbon atoms and up to two heteroatoms of O, N or S,

Components (A) and (B) may be used alone, but preferably are used in combinations ranging from 1 to 9 parts by weight (A) and 9 to 1 parts by weight of (B). All percentages and ratios expressed herein are by weight.

The separate embodiments of using nitroxides or amines or both in accordance with the present invention are described below in order of preference.

The first preference is the use of nitroxides in combination with alkylamines as vapor phase inhibitors. The nitroxides useful in the present invention and represented by Formula I above must be stable for a time at the temperature of the system in which they are employed. Examples of such nitroxides that meet the general formula I presented above include 1-pyrrolidinyloxys, 1-piperidinyloxys and tetrahydro-1-pyridinyloxys. Suitable nitroxides wherein the R₅ and R₆ form part of a ring are 4-hydroxy-2, 2,6,6-tetramethyl-1-piperidinyloxy, 2,2,6,6-tetramethyl-1-piperidinyloxy, 4-oxo-2,2,6,6-tetramethyl-1-piperidinyloxy, 1-pyrrolinyloxy, and 3,6-dihydro-2,2,6,6-tetramethyl-1(2H)-pyridinyloxy. Suitable R₅ and R₆ groups are methyl, ethyl, and propyl groups. A specific example of a suitable compound where R₁ and R₂ and R₃ and R₄ and R₅ and R₆ are all alkyl groups are when they are all methyl groups and formula (I) is di-tert-butyl nitroxide. The preferred nitroxides are those wherein the R₅ and R₆ form a ring structure with the nitrogen, preferably a six-membered ring, for example, 4- hydroxy-2, 2,6,6-tetramethyl-1-piperidinyloxy (HTMPO), 2,2,6,6-tetramethyl-1-piperidinyloxy (TEMPO), and 3,6-dihydro-2, 2,6,6-tetramethyl-1(2H)-pyridinyloxy (DHTMPO).

The most preferred nitroxide is DHTMPO. The nitroxide can be obtained from the tosylate of HTMPO as described in Acta Cryst. (1983).C39, 1656-59. Tests have shown that this liquid nitroxide is sufficiently volatile to enter the vapor phase of a monomer system and thereby provide protection in both the overhead vapor phase and the bottoms liquid phase of such systems.

The volatile amines may include those described below. These amines are well known in the art and commercially available.

The combination of component (A) nitroxide and (B) amine can be introduced into the operations separately or as a blend. The ratios of (A):(B) can range from 9:1 to 1:9, preferably from 4:1 to 1:4, most preferably from 6:4 to 4:6.

The second preference is when nitroxides are use as vapor phase inhibitors by themselves. It has been discovered that a specific nitroxide is an effective vapor phase inhibitor in monomer systems, particularly butadiene and styrene systems. This nitroxide is 3,6-dihydro-2, 2,6,6-tetramethyl-1(2H)-pyridinyloxy (DHTMPO). This free radical nitroxide, unlike the nitroxides disclosed in U.S. Patent #4,670,131, is unsaturated at the 3-position and exists as a liquid at room temperature. This nitroxide is sufficiently volatile at the operating conditions of the unit being treated to provide appreciable concentration in the vapor phase of such operations. The unsaturation and relatively low boiling point (75° C at 20mmHg) contribute to this nitroxide's volatility in the system. It should be noted that the DHTMPO provides fouling inhibition in both the gas phase and liquid phase of the monomer system being treated.

The third preference is the use of an alkylamine as a vapor phase inhibitor. It has been discovered that vinyl polymerization in monomer vapor phases can be reduced by using certain alkyl primary and secondary amines, having the following general formula:

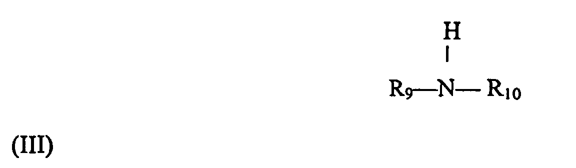

Where R₉ is selected from methyl, ethyl, and propyl groups, and R₁₀ is H, methyl, ethyl, or propyl, or R₉ and R₁₀ are the part of the ring that contains at least 4 and no more than 5 carbon atoms and up to two heteroatoms of O, N or S.

The most preferred amines are methylamine, dimethylamine, ethylamine, diethylamine, isopropylamine, diisopropylamine and dipropylamine.

The monomer systems treated with an inhibitor in accordance with the present invention include those present in such unit operations as separation, distillation, extraction, purification, handling, transporting, and storage of monomers having from 2 to 20 carbon atoms. The term "inhibitor" used in connection with describing operations means any of the three embodiments described above (i.e., two-component inhibitors containing free radicals and alkylamines or each component alone).

The preferred vinyl monomers include ethylene, propylene, butene-1, pentenes, hexenes, octenes, dodecenes, butadienes, isoprene, piperylene, hexadienes, styrenes, divinylbenzenes and acrylates. Butadiene, isoprene, acrylate, and styrene operations are particularly adapted for inhibition by the present invention because of their propensity to form popcorn polymer in the vapor phase. The processing conditions of these systems generally range from about 100°F to about 500°F (from about 37°C to about 260°C), temperatures at which the nitroxides are stable, and the inhibitors are sufficiently volatile to enter the vapor phase of the system.

The inhibitor may be injected into the liquid at any location, but preferably is injected into the feed stream of the unit operation where the liquid monomer is being treated.

The inhibitor may be injected into the liquid in neat form, but preferably is injected as a formulation wherein the active components are dissolved in a suitable solvent. Such suitable solvents, include, but are not limited to, water, toluene, or aromatic naphtha. Each component of the nitroxide-amine inhibitor may be injected separately, but it is preferred to combine them in a single formulation. The formulation may contain both active inhibitors in all proportions, depending on their solubilities in the solvent. The formulation may also contain other additives, such as dispersants, antioxidants, corrosion inhibitors, surfactants, metal deactivators, and oxygen scavengers.

The concentration of the inhibitor (actives) in the liquid stream being treated ranges from about 1 ppm to about 10,000 ppm, preferably from about 5 ppm to about 5000 ppm, and most preferably from about 10 ppm to about 1000 ppm.

Since the inhibitor enters the system in a liquid (e.g., feed stream), an important property of the inhibitor is that it has sufficient volatility to allow at least a portion of the inhibitor to pass from the liquid to the gas phase, thereby providing protection against polymer formation in the vapor phase. The examples below provide evidence that effective amounts of the inhibitors contemplated by the present invention do, in fact, enter the vapor phase and provide protection therein.

It is important to also note that a substantial amount of the inhibitor remains in the liquid and provides antipolymerant protection for the bottoms and equipment downstream.

The following examples are intended to be illustrative of the present invention and to teach one of ordinary skill in the art how to make and use the invention. These Examples are not intended to limit the invention or its protection in any way.

### EXAMPLES

### Inhibitor Test Procedures

The test procedure used to evaluate the effectiveness of various inhibitors utilized a modification of a Schlenk storage tube to allow a glass basket to be suspended above and not in contact with the liquid monomer being tested. Polybutadiene popcorn seeds (0.045-0.050 g) were suspended in separate tubes over 5 to 9.0 g of a liquid monomer. The monomer in certain tubes was dosed with an appropriate amount of inhibitor. The tubes were placed in an oil bath and opened successively after predetermined times. The Aldrich inhibitors used to stabilize divinylbenzene or 2,3-dimethylbutadiene were not removed before the tests because it was proven that t-butylcatechol (TBC) and butylated hydroxytoluene (BHT) did not perform in the vapor phase; hence, these liquid monomers always contained either of those two inhibitors in addition to the inhibitor being tested. Only butadiene was used uninhibited. The inhibitors evaluated were added as toluene or aqueous solutions to the liquid monomer before beginning a freeze-thaw procedure.

Before the experiment, the polymer seeds were washed with methanol and evacuated for ten minutes under vacuum. A small sample of the seed was placed in a glass basket above and not in contact with a monomer in the modified Schlenk storage tube. The stopper was secured with special clamps to eliminate leaks. The contents of the tube were first cooled in a dry ice-acetone bath, then frozen in liquid nitrogen. The air was removed from the tubes through a vacuum pump and replaced by argon via the Firestone valve.

The air in the liquid was removed by repeating the freeze and thaw procedure until no more gas bubbles were observed during the thawing step. In the last cycle, the tubes were left under slight vacuum, thawed, and placed in an upright position in a large oil bath at constant temperature. They were kept there for an appropriate time, then removed, cooled to ambient temperature, and opened. The weights of the seeds were recorded before and after each experiment.

### SAMPLES

The samples tested were as follows:

### Known Inhibitors (all data given for these inhibitors is not to be considered an example of the instant claimed invention, rather that date is to be considered a comparative example):

1. t-Butylcatechol (TBC)
2. Butylated hydroxytoluene (BHT)
3. N,N-Diethylhydroxylamine (DEHA)
4. Thiophenol

### Nitroxides(word indicating its state at room temperature)

5. 3,6-Dihydro-2,2,6,6-tetramethyl-1(2H)-pyridinyloxy (liquid) (DHTMPO)
6. 2,2,6,6-Tetramethyl-1-piperidinyloxy (solid) (TEMPO)
7. 4-Hydroxy-2,2,6,6-tetramethyl-1-piperidinyloxy (solid) (HTMPO)
8. 4-Acetoxy-2,2,6,6-tetramethyl-1-piperidinyloxy (solid) (ATMPO)
9. 4-Benzoyloxy-2,2,6,6-tetramethylpiperidinyloxy (solid) (BTMPO)
10. 4-Butyryloxy-2,2,6,6-tetramethylpiperidinyloxy (solid) (BuTMPO)
11. Di-tert-butyl nitroxide (liquid) (DBNO)
12. 4-Hydroxy-2,2,6,6-tetramethyl-1-piperidinyloxy diester of sebacic acid (solid) (HTMPO Ester)
13. 4-Chloro-2,2,6,6-tetramethyl-1-piperidinyloxy (solid) (CTMPO)

### Amines

14. Methylamine (Mam)
15. Ethylamine (EAm)
16. Isopropylamine (iPAm)
17. n-Propylamine (PAm)
18. n-Butylamine (BAm)
19. Isobutylamine (iBAm)
20. sec-Butylamine (sBAm)
21. tert-Butylamine (tBAm)
22. Ethylenediamine (EDAm)
23. Dimethylamine (DMAm)
24. Diethylamine (DEAm)
25. Dipropylamine (DPAm)
26. Diisopropylamine (DiPAm)
27. 2,2,6,6-Tetramethylpiperidine (TMP-NH)
28. Triethylamine (TEAm)
29. Piperidine
30. Morpholine

### Nitroxides and Amines (50-50 blends)

31. DHTMPO/DEAm
32. DHTMPO/EAm
33. DHTMPO/iPAm
34. HTMPO/DEAm
35. HTMPO/EAm
36. HTMPO/iPAm
37. HTMPO/DEHA
38. DHTMPO/DEHA
39. HTMPO/Morpholine
40. DHTMPO/Morpholine
41. HTMPO/DPAm

### Example I

Series I Tests were conducted on certain inhibitors in 2,3 dimethylbutadiene at 70°C. The popcorn growth in the vapor phase was measured at various times in accordance with test procedures described above and the data are presented in Table I.

**TABLE I**

| Popcorn growth in 2,3-dimethylbutadiene vapors. | | | | | | | |
|---|---|---|---|---|---|---|---|
| Test No. | Sample No. | Inhibitor | Dosage ppm | % Seed Growth | | | |
| | | | | 48 hrs. | 64 hrs. | 96 hrs. | 160 hrs. |
| I-1 | Blank | --- | --- | 40.1 | 75.6 | 101.8 | 150.2 |
| I-2 | 1 | TBC | 100 | 37.8 | 62.8 | | |
| I-3 | 2 | BHT | 100 | 29.8 | 71.2 | | |
| I-4 | 3 | DEHA | 100 | 3.7 | 14.2 | 53.6 | 89.6 |
| I-5 | 5 | DHTMPO | 100 | 0 | 0 | 0 | 0 |
| I-6 | 5 | DHTMPO | 50 | 0 | 5.1 | 15.1 | 51.1 |
| I-7 | 7 | HTMPO | 100 | 0 | 11.2 | 15.6 | --- |
| I-8 | 7 | HTMPO | 50 | 9.2 | --- | 54.3 | 71.1 |
| I-9 | 31 | DHTMPO/DEAm | 100 | 0 | 0 | 0 | 1.7 |
| I-10 | 32 | DHTMPO/EAm | 100 | 0 | 0 | 0 | 1.1 |
| I-11 | 33 | DHTMPO/iPAm | 100 | 0 | 0 | 0 | 7.3 |
| I-12 | 34 | HTMPO/DEAm | 100 | 18.2 | --- | 51.1 | 58.1 |
| I-13 | 35 | HTMPO/Eam | 100 | 0 | | 18.5 | 24.1 |
| I-14 | 36 | HTMPO/iPAm | 100 | 0 | 3.9 | --- | 13.3 |
| I-15 | 37 | HTMPO/DEHA | 100 | --- | --- | --- | 66.1 |
| I-16 | 38 | DHTMPO/DEHA | 100 | --- | | --- | 27.2 |
| I-17 | 39 | HTMPO/Morpholine | 100 | 3.5 | --- | --- | 48.9 |
| I-18 | 40 | DHTMPO/Morpholine | 100 | 0 | 4.2 | --- | 39.9 |
| I-19 | 41 | HTMPO/DPAm | 100 | --- | 4.5 | --- | 47.2 |

The Series I test data demonstrate the effectiveness of the combination of nitroxides and low-molecular weight alkylamines (DEAm, iPAm, and EAm) in reducing popcorn polymer growth in the vapor phase. DHTMPO with DEAm, iPAm, and EAm were particularly effective. HTMPO blends were not as effective as DHTMPO blends, but more effective than the HTMPO alone (Test No. I-8). Note that Samples 37 and 38 (nitroxide and DEHA) are not part of the present invention. Test data on samples 37 and 38 demonstrate that the volatile alkylamines with the nitroxides (Sample 31) are more effective than blends with DEHA.

### Example II

The Series II tests compared the performance of alkylamines in inhibiting popcorn growth in dimethylbutadiene vapors at 70°C. These test data are presented in Table II.

**TABLE II**

| Popcorn growth in 2,3-dimethylbutadiene vapors at 70°C. | | | | | | |
|---|---|---|---|---|---|---|
| Test No. | Sample No. | Inhibitor | Dosage ppm | % Seed Growth | | |
| | | | | 64 hrs. | 96 hrs. | 160 hrs. |
| II-1 | Blank | --- | | 73.1 | 99.8 | 153.1 |
| II-2 | 1 | TBC | 100 | 62.8 | | |
| II-3 | 2 | BHT | 100 | 71.2 | | |
| II-4 | 3 | DEHA | 100 | | 14.3 | 33.3 |
| II-5 | 4 | Thiophenol | 100 | | 69.8 | --- |
| II-6 | 14 | Mam | 100 | --- | | 18.1 |
| II-7 | 15 | Eam | 100 | | | 11.3 |
| II-8 | 16 | iPAm | 100 | | 0 | 5.7 |
| II-9 | 17 | Pam | 100 | | 20.3 | 44.1 |
| II- 10 | 18 | Bam | 100 | | 25.4 | 48.4 |
| II- 11 | 19 | iBAm | 100 | | 48.9 | 60.1 |
| II- 12 | 20 | sBAm | 100 | | 27.2 | 65.7 |
| II- 13 | 21 | tBAm | 100 | | 17.5 | 41.0 |
| II- 14 | 22 | EDAm | 100 | | 32.4 | 46.2 |
| II- 15 | 23 | DMAm | 100 | | 0 | 18.1 |
| II- 16 | 24 | DEAm | 100 | 0 | 11.0 | 39.4 |
| II-17 | 26 | DiPAm | 100 | 0 | 6.7 | 11.7 |
| II- 18 | 25 | DPAm | 100 | 3.2 | --- | 20.9 |
| II- 19 | 30 | Morpholine | 100 | 4.0 | 12.3 | 28.4 |
| II-20 | 29 | Piperidine | 100 | 14.3 | 77.3 | 116.3 |
| II-21 | 27 | TMP-NH | 100 | --- | 80.9 | 98.3 |
| II-22 | 28 | TEAm | 100 | 33.4 | 65.7 | --- |

The Series II test data reveal that the low-molecular weight alkylamines (MAm, EAm, iPAm, DMAm) gave the best results. The secondary dimethyl, diethyl, dipropyl amines and morpholine also gave good results; however, the more volatile amines MAm, DMAm, and EAm, along with iPAm gave the best results, demonstrating the importance of volatility in vapor phase protection.

### Example III

The nitroxide samples and conventional inhibitors were tested in divinylbenzene and dimethylbutadiene vapors. The Series III test data are presented in Table III.

**TABLE III**

| Popcorn growth in divinylbenzene vapors and 2,3- dimethylbutadiene vapors. | | | | | | | | |
|---|---|---|---|---|---|---|---|---|
| Test No. | Sample No. | Inhibitor | Dosage ppm | Temp °C | % Seed Growth | | | |
| | | | | | 48 hrs. | 88 hrs. | 96 hrs. | 160 hrs. |
| | | | | | | | | |

| Divinylbenzene vapors: | | | | | | | | |
|---|---|---|---|---|---|---|---|---|
| III-1 | Blank | --- | --- | 80 | 59.6 | --- | --- | --- |
| III-2 | 5 | DHTMPO | 500 | 80 | 0.4 | 3.3 | --- | --- |
| III-3 | 6 | TEMPO | 500 | 80 | 3.5 | 9.5 | --- | --- |
| III-4 | 7 | HTMPO | 500 | 80 | 20.2 | 19.0 | --- | --- |
| III-5 | 8 | ATMPO | 500 | 80 | 2.4 | 19.8 | --- | --- |

| Dimethylbutadiene vapors: | | | | | | | | |
|---|---|---|---|---|---|---|---|---|
| III-6 | Blank | --- | 100 | 70 | 61.7 | 93.0 | 112.4 | 162.2 |
| III-7 | 1 | TBC | 100 | 70 | 44.1 | 89.1 | --- | --- |
| III-8 | 3 | DEHA | 100 | 70 | 3.7 | 14.2 | 32.2 | 54.4 |
| III-9 | 5 | DHTMPO | 100 | 70 | 0 | 1.3 | 0 | 0 |
| III-10 | 6 | TEMPO | 100 | 70 | 2.3 | 5.3 | --- | 9.1 |
| III-11 | 7 | HTMPO | 100 | 70 | 9.9 | 13.4 | 15.6 | --- |
| III-12 | 8 | ATMPO | 100 | 70 | 20.6 | 34.2 | --- | --- |
| III-13 | 9 | BTMPO | 100 | 70 | 29.7 | 89.2 | --- | --- |
| III-14 | 10 | BuTMPO | 100 | 70 | 60.9 | 90.1 | --- | --- |
| III-15 | 11 | DBNO | 100 | 70 | | | --- | 13.9 |
| III-16 | 12 | HTMPO Ester | 100 | 70 | | | 113.0 | 161.1 |
| III-17 | 13 | CTMPO | 100 | 70 | | | | 9.8 |
| | | | | | | | | |
| III-18 | Blank | --- | --- | 70 | 61.7 | 93.0 | | 162.8 |
| III-19 | 3 | DEHA | 50 | 70 | 20.7 | 38.4 | | 71.2 |
| III-20 | 5 | DHTMPO | 50 | 70 | 0 | 11.7 | | 51.2 |
| III-21 | 6 | TEMPO | 50 | 70 | 10.3 | 10.2 | | 71.2 |
| III-22 | 7 | HTMPO | 50 | 70 | 13.3 | 67.9 | | 97.1 |

The Series III test data demonstrate that the preferred nitroxide (DHTMPO) performs much better than conventional inhibitors in reducing popcorn growth in divinylbenzene vapors and dimethylbutadiene vapors over a wide range of treating concentrations (500, 100, and 50 ppm). Moreover, DHTMPO performs better than the other nitroxides tested. Test numbers III-2, III-9, and III-20, using DHTMPO, gave the best long-term (160 hrs.) results of all of the nitroxides tested. The reason for the improved results are believed to be due in part to the liquid state of DHTMPO that contributes to its volatility.

### Example IV

The Series IV tests were of selected inhibitors in butadiene vapors at 60 °C. These data are presented in Table IV.

| Popcorn growth in butadiene vapors at 60°C. | | | | | | |
|---|---|---|---|---|---|---|
| Test No. | Sample No. | Inhibitor | Dosage ppm | % Seed Growth | | |
| | | | | 64 hrs. | 96 hrs. | 160 hrs. |
| IV-1 | Blank | --- | | 40.9 | 66.8 | 96.2 |
| IV-2 | 3 | DEHA | 100 | 7.0 | 11.4 | 44.6 |
| IV-3 | 7 | HTMPO | 100 | 12.9 | 23.4 | 32.9 |
| IV-4 | 5 | DHTMPO | 100 | 2.9 | 6.1 | 13.9 |
| IV-5 | 6 | TEMPO | 100 | 9.5 | 19.9 | 31.2 |
| IV-6 | 24 | DEAm | 100 | 0 | 0 | 11.5 |
| IV-7 | 16 | IPAm | 100 | 14.7 | 21.3 | 28.1 |
| IV-8 | 36 | HTMPO/iPAm | 100 | 10.0 | 16.9 | 31.0 |
| IV-9 | 33 | DHTMPO/iPAm | 100 | 5.6 | 12.9 | 16.7 |
| IV-10 | 34 | HTMPO/DEAm | 100 | 4.9 | 6.7 | 22.8 |
| IV-11 | 31 | DHTMPO/DEAm | 100 | 0 | 0 | 6.7 |

The Series IV test data confirm findings from three previous series of experiments. Due to the lower temperature of the tests, the superiority of DHTMPO performance over solid nitroxides is more pronounced than in previous experiments.

Although the inhibitors were tested in specific monomer systems (butadiene, 2,3-dimethylbutadiene and divinylbenzene), it is important to note that the fouling in many vinyl systems (e.g., styrene, ethylene, isoprene, propylene, piperylene, vinyl acetate and acrylates) follows the same pathway. Since the experiments used seeds of polybutadiene, the data may be viewed as representative of monomer system fouling from polymerization of butadiene in the vapor phase.

Changes can be made in the composition, operation and arrangement of the method of the present invention described herein without departing from the concept and scope of the invention as defined in the following claims:

## Claims

1. A method of inhibiting polymerization and consequent fouling in the vapor phase of a monomer system comprising a liquid monomer phase and a vapor phase, said method comprising introducing into the liquid monomer phase an effective amount of an inhibitor having sufficient volatility in the system to enter the vapor phase of the system and inhibit vinyl polymerization therein, said inhibitor comprising a combination of:
(a) from 10 to 90 wt % of a nitroxide, and
(b) from 10 to 90 wt % of volatile alkyl amines, wherein the alkyl groups are selected from methyl, ethyl, propyl groups and aliphatic ring structures containing up to 3 heteroatoms.

2. The method of claim 1 wherein said nitroxide has the following formula: 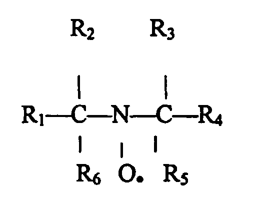 wherein each of R₁, R₂, R₃ and R₄ is an alkyl group or heteroatom substituted alkyl group having 1 to 15 carbon atoms, wherein R₅ and R₆:
(i) each are an alkyl group having 1 to 15 carbon atoms, or a substituted alkyl group having 1 to 15 carbon atoms wherein the substituent is halogen, cyano, - CONH₂, -SC₆H₅, -S-COCH₃, -OCOH₃, -OCOC₂H₅, carbonyl, alkenyl, wherein the double bond is not conjugated with the nitroxide moiety, or ― COOR wherein R of the ―COOR group is alkyl or aryl, or
(ii) together form part of a ring that contains 4 or 5 carbon atoms and up to two heteratoms of O, N or S;
and wherein said volatile alkyl amine has the following formula (II): 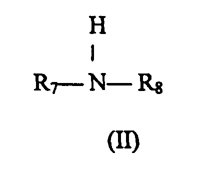 Where R₇ is a methyl, ethyl, n-propyl or an isopropyl group, and
R₈ is H, or methyl, ethyl, n-propyl or an isopropyl group,
or R₇ and R₈ together form part of a ring that contains at least 4 and not more than 5 carbon atoms and up to two heteroatoms of O, N or S.

3. The method of claim 1 wherein the nitroxide is selected from the group consisting of
3, 6-dihydro-2, 2,6, 6-tetramethyl-1(2H)-pyridinyloxy (DHTMPO),
4-hydroxy-2, 2, 6, 6-tetramethyl-1-piperidinyloxy (HTEMPO), and
2,2,6,6-tetramethyl-1-piperidinyloxy(TEMPO).

4. The method of claim 3 wherein the nitroxide is 3,6-dihydro-2, 2, 6, 6-tetramethyl-1(2H)-pyridinyloxy(DHTMPO).

5. The method of claim 1 wherein the alkylamine is selected from the group consisting of methylamine, dimethylamine, ethylamine, diethylamine and isopropylamine.

6. The method of claim 1 wherein the polymerization fouling in the vapor phase is caused by polymerization of butadiene, isoprene, divinylbenzene, styrene or acrylates and methacrylates.

7. The method of claim 1 wherein the inhibitor comprises from 10 to 90 wt% of the nitroxide and 10 to 90 wt% of the alkyl amine.

8. The method of claim 1 wherein the concentration of the inhibitor (actives) introduced into the liquid monomer ranges from about 1 to about 10,000 ppm.

9. The method of claim 8 wherein the concentration of the inhibitor (actives) ranges from about 10 to about 1000 ppm.

10. The method of claim 1 wherein the nitroxide is liquid at ambient condition.

11. The method of claim 1 wherein the monomer is a C₂ to C₂₀ vinyl monomer.

12. The method of claim 1 wherein the monomer was selected from the group consisting of, ethylene, propylene, butenes, pentenes, piperylene, hexenes, octenes, dodecenes, butadienes, isoprene, 2,3-dimethylbutadiene, hexadienes, styrenes, divinylbenzenes and acrylates.

13. A method of inhibiting polymerization fouling in a monomer system comprising a liquid phase and a vapor phase, said method comprising introducing into the liquid monomer phase an effective amount of an inhibitor having sufficient volatility in the system to enter the vapor phase of the system and inhibit vinyl polymerization therein, said inhibitor comprising 3,6-dihydro-2, 2,6,6-tetramethyl-1(2H)-pyridinyloxy.

14. The method of claim 13 wherein the monomer system is selected from the group consisting of dimethylbutadiene, divinylbenzene, butadiene, styrene and actylate monomer systems.

15. The method of claim 13 wherein the concentration of the nitroxide in the liquid monomer phases ranges from about 10 to about 1000 ppm.

16. A method of inhibiting polymerization and consequent fouling in a monomer system comprising a liquid phase and a vapor phase, said method comprising introducing into the liquid monomer phase an effective amount of an inhibitor having sufficient volatility in the system to enter the vapor phase of the system and inhibit vinyl polymerization therein, said inhibitor comprising an alkylamine selected from the groups consisting of primary and secondary amines of methyl, ethyl, propylamines and morpholine.

17. The method of claim 16 wherein the alkyl amine is selected from the group consisting of methylamine, dimethylamine, ethylamine, diethylamine, isopropylamine, diisopropylamine and dipropylamine.

18. The method of claim 16 wherein the amine is selected from the group consisting of methylamine, dimethylamine, ethylamine, diethylamine, and isopropylamine.

19. An antipolymerant composition for use in inhibiting the vapor phase vinyl polymerization in monomer systems comprising a combination of
(j) from 10 to 90 wt % of a nitroxide, and
(k) from 10 to 90 wt % of an alkylamine selected from primary and secondary alkylamines of methyl, ethyl, propyl groups and aliphatic ring structure.

20. The composition of claim 19 wherein the nitroxide is 3,6-dihydro-2, 2,6,6-tetramethyl-1(2H)pyridinyloxy.
